Europäisches Patentamt

European Patent Office

Office européen des brevets

(11) Veröffentlichungsnummer: **0 455 198 A1**

## EUROPÄISCHE PATENTANMELDUNG

(21) Anmeldenummer: **91106928.4**

(22) Anmeldetag: **29.04.91**

(51) Int. Cl.5: **B62J 1/26**

(30) Priorität: **30.04.90 DE 4013869**

(43) Veröffentlichungstag der Anmeldung:
**06.11.91 Patentblatt 91/45**

(84) Benannte Vertragsstaaten:
**BE CH DE DK FR IT LI NL**

(71) Anmelder: **BERGER + PARTNER GmbH**
**Talstrasse 172**
**W-7024 Filderstadt 1(DE)**

(72) Erfinder: **Funke, Günther**
**Landhausstrasse 23**
**W-7042 Aidlingen 2(DE)**

(74) Vertreter: **Witte, Alexander, Dr.-Ing. et al**
**Witte, Weller & Hilgenfeldt Patent- und**
**Rechtsanwälte Augustenstrasse 7**
**W-7000 Stuttgart 1(DE)**

(54) **Luftgefüllter Sattel, insbesondere für Zweiräder.**

(57) Die Erfindung betrifft einen luftgefüllten Sattel, insbesondere für Zweiräder, mit einer Satteldecke (2), die randseitig unter der Bildung eines luftgefüllten Hohlraums mit einer starren Bodenplatte (1) gasdicht verbunden ist. Die Satteldecke (2) ist zumindest im hinteren Bereich des Sattels über mindestens einen Steg (19) aus flexiblem Material mit geringer Dehnbarkeit mit der Bodenplatte (1) verbunden. Durch die allseitige Festlegung der Satteldecke (2) an der starren Bodenplatte (1) und die zusätzliche Verbindung über mindestens einen Steg (19) mit geringer Dehnbarkeit verbindet der Sattel den hohen Sitzkomfort eines luftgefederten Sattels mit progressiver Federcharakteristik mit den guten Stabilitätseigenschaften eines herkömmlichen Sattels.

Fig. 2

EP 0 455 198 A1

Die Erfindung betrifft einen luftgefüllten Sattel, insbesondere für Zweiräder, mit einer Satteldecke, die unter Bildung eines luftgefüllten Hohlraums mit einer starren Bodenplatte gasdicht verbunden ist.

Ein solcher Sattel ist aus der DE 84 31 482 U1 bekannt. Durch die Gasfüllung soll eine angenehme Federcharakteristik und ein guter Sitzkomfort erreicht werden.

Als nachteilig hat sich bei dem vorbekannten Sattel erwiesen, daß sich der Sattelüberzug beim Aufpumpen ballonartig aufbläht, so daß kein sicherer Sitz auf dem Sattel gewährleistet ist.

Aus der DE 30 01 693 A1 ist ferner ein Sattel bekannt, bei dem eine gasdichte, gasgefüllte Hülle auf einer wannenartigen Unterlage oder auf einem herkömmlichen Sattel angeordnet ist. Die Hülle kann hierbei im hinteren Bereich durch einen Mittelsteg in zwei Hälften getrennt sein.

Bei dieser Ausführung wird zwar ein ballonartiges Aufblähen vermieden, jedoch ist auch hierbei kein sicherer Halt auf dem Sattel gewährleistet, da die Hülle nicht vollständig, insbesondere nicht im Bereich des Mittelsteges mit der Bodenplatte fest verbunden ist. Die zweigeteilte Hülle weist im aufgepumpten Zustand eine etwa handelförmigen Querschnitt auf und kann insbesondere keinen sicheren Seitenhalt gewährleisten.

Die Aufgabe der Erfindung besteht demnach darin, einen luftgefüllten Sattel der eingangs genannten Art zu schaffen, der einen guten Federkomfort ermöglicht und gleichzeitig einen sicheren Halt auf dem Sattel gewährleistet.

Diese Aufgabe wird gemäß der vorliegenden Erfindung dadurch gelöst, daß die Satteldecke zumindest im hinteren Bereich des Sattels über mindestens einen Steg aus flexiblen Material mit geringer Dehnbarkeit an der starren Bodenplatte gehalten ist.

Durch die Befestigung der Satteldecke an der starren Bodenplatte wird in Verbindung mit dem Steg aus flexiblen Material mit geringer Dehnbarkeit eine sichere Verbindung des luftgefüllten Hohlraums mit der Sattelbasis ermöglicht. Der Sattel gewährleistet einen sicheren Seitenhalt auch beim Durchfahren von Kurven und gewährleistet aufgrund des Steges mit geringer Dehnbarkeit einen sicheren Halt auch bei verstärkten Beanspruchungen, wie sie beim Anfahren und Bremsen auftreten.

Je nach Form und Größe des Sattels kann es auch sinnvoll sein, zusätzliche Stege zur Verstärkung vorzusehen, beispielsweise zwei seitliche Stege zusätzlich zu einem Mittelsteg.

In bevorzugter Weiterbildung bestehen die Satteldecke und der Steg bzw. die Stege aus einem elastischen Grundmaterial, wobei die Stege eine Verstärkung aus einem Material geringer Dehnbarkeit aufweisen. Als Grundmaterial ist hierbei vorzugsweise Gummi oder Kautschuk vorgesehen, während die Stege in bevorzugter Ausführung faserverstärkt sind, wozu insbesondere eine Textillauflage dienen kann.

Durch diese Maßnahmen werden zum einen die elastischen Eigenschaften der Satteldecke erhalten, so daß die durch die Luftfüllung bedingte angenehme progressive Federcharakteristik voll ausgenutzt wird, zum anderen wird die geringe Dehnbarkeit der Steges bzw. der Stege auf besonders einfache Weise erreicht. Dabei ist gleichzeitig eine einfache, zeit- und kostensparende Herstellung möglich.

Um eine weitere Verbesserung der Stabilitätseigenschaften des Sattels zu erreichen und die vorteilhaften Eigenschaften eines luftgefüllten Sattels mit den guten Führungseigenschaften eines herkömmlichen, wenig gefederten Sattels zu verbinden, weist die Satteldecke in besonders bevorzugter Ausführung im vorderen Bereich des Sattels eine größere Wandstärke als im hinteren Bereich auf. Dadurch kommen im hinteren Bereich die Federeigenschaften stärker zur Geltung als im vorderen Bereich, wo die Führungseigenschaften starker betont sind.

Um selbst bei einer möglicherweise auftretenden Undichtigkeit des Sattels noch ein Weiterfahren zu ermöglichen, ist innerhalb des luftgefüllten Hohlraums zwischen Bodenplatte und Satteldecke entweder eine Schaumstoffeinlage vorgesehen oder aber eine wabenstrukturartige Einlage, die vorzugsweise aus druckbeständigem Gummi oder Kunststoff besteht.

Eine weitere Verbesserung des Sitzkomforts kann durch einen zusätzlichen Überzug des Sattels aus einem elastischen Textilmaterial erreicht werden, das vorzugsweise atmungsaktiv ausgebildet ist. Dieser Textilüberzug ist abnehmbar und ggf. waschbar.

Zur Befestigung jedes Steges kann bodenplattenseitig ein schlaufenartiges Ende am Steg vorgesehen sein, das über einen Stift mit Laschen an der Bodenplatte scharnierartig festgelegt ist.

Eine weitere einfache Befestigungsmöglichkeit ergibt sich dadurch, daß jeder Steg an seinem unteren Ende einen Randwulst aufweist, der zwischen beidseitigen Lippen an der Bodenplatte festgelegt ist.

In alternativer Weise kann der Randwulst auch in einer Sicke an der Bodenplatte gehalten sein.

Die Erfindung ist nachstehend anhand bevorzugter Ausführungsbeispiele, die in der Zeichnung dargestellt sind, näher erläutert. Es zeigen:

Fig. 1 eine Ansicht eines erfindungsgemäßen Sattels von unten;

Fig. 2 einen Querschnitt des Sattels gemäß Fig. 1 entlang der Linie II-II von Fig. 1;

Fig. 3 einen vergrößerten Teilschnitt, aus dem eine erste Ausführung der Stegbefestigung gemäß Fig. 2 ersichtlich ist;

Fig. 4 einen vergrößerten Teilschnitt mit einer zweiten, gegenüber Fig. 3 abgewandelten Stegbefestigung;

Fig. 5 einen vergrößerten Teilschnitt mit einer weiteren Abwandlung der Stegbefestigung;

Fig. 6 eine Ansicht, ähnlich Fig. 1, jedoch für ein weiteres Ausführungsbeispiel der Erfindung;

Fig. 7 eine weitere Querschnittsdarstellung, ähnlich derjenigen der Fig. 2, jedoch entlang der Linie VII-VII von Fig. 6.

In seiner äußeren Form entspricht der Sattel der üblichen dreieckförmigen Grundform, die im vorderen Bereich des Sattels beidseitig über eine konkave Krümmung in den hinteren Sitzbereich übergeht, der nach hinten durch eine konvexe Krümmung abgeschlossen ist. Der Sattel weist eine starre Bodenplatte 1 auf, die aus Blech besteht, und an deren Unterseite ein Sattelhalteblech 13 in der Grundform eines Y festgelegt ist. Um eine sichere luftdichte Verbindung zwischen Satteldecke 2 und Bodenplatte 1 zu gewährleisten, ist am unteren glatten Ende 3 der Seitenwände der Satteldecke 2 ein umlaufender Endwulst 4 vorgesehen. Die Bodenplatte 2 weist eine umlaufende Randbördelung 8 auf, die vom glatten Ende 3 umfaßt wird. An das glatte Ende 3 schließt sich der einstückig ausgebildete Endwulst 4 an, der in die Randbördelung 8 der Bodenplatte 1 eingelegt ist. Der Endwulst 4 ist durch einen inneren Stahlring 5 allseitig nach außen gegen die Randbördelung der Bodenplatte 1 angepreßt und dadurch zuverlässig abgedichtet.

Zur Abstützung des Stahlformrings 5 ist ein Sattelhalteblech 13 mit Y-förmiger Grundform vorgesehen, dessen pratzenartige Enden 10 den Stahlformring 5 im Bereich der beiden konkaven Krümmungen und zusätzlich am hinteren Ende des Sattels im Bereich der konvexen Krümmung abstützen.

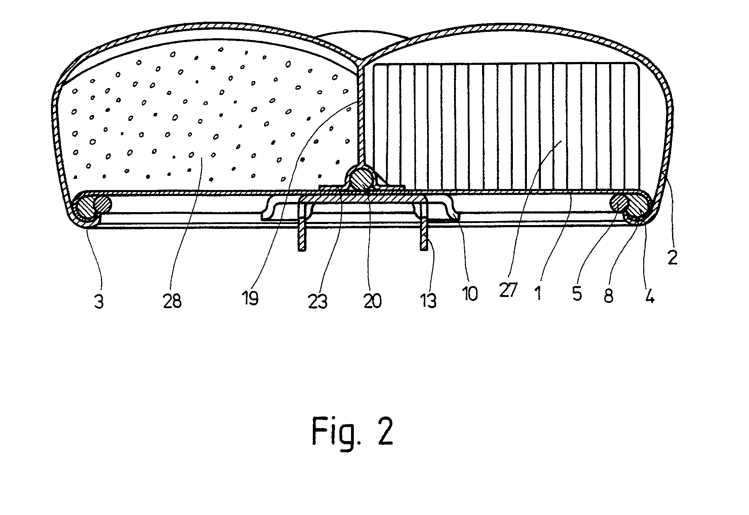

Im hinteren Bereich des Sattels ist die Satteldecke 2 über einen Mittelsteg 19, der sich über etwa zwei Drittel der Gesamtlänge des Sattels erstreckt, mit der Bodenplatte 1 verbunden. Satteldecke 2 und Mittelsteg 19 sind einstückig aus Gummi ausgebildet, wobei das untere Ende des Mittelsteges 19 als Randwulst 20 gem. Fig. 2 ausgebildet ist. Um eine Dehnung des Mittelsteges 19 zu verhindern, ist dieser zusätzlich durch Textilauflagen verstärkt (nicht dargestellt).

Um selbst bei einem undicht gewordenen Sattel noch ein Weiterfahren zu ermöglichen, ist innerhalb des luftgefüllten Hohlraums eine Schaumstoffeinlage 28 vorgesehen, die in der linken Hälfte des Sattels in Fig. 2 schematisch angedeutet ist. Alternativ kann auch eine Einlage 27 aus druckbeständigem Kunststoff oder Gummi mit wabenartigen Elementen sechseckiger Querschnittsform vorgesehen sein, die in der rechten Hälfte von Fig. 2 schematisch angedeutet sind.

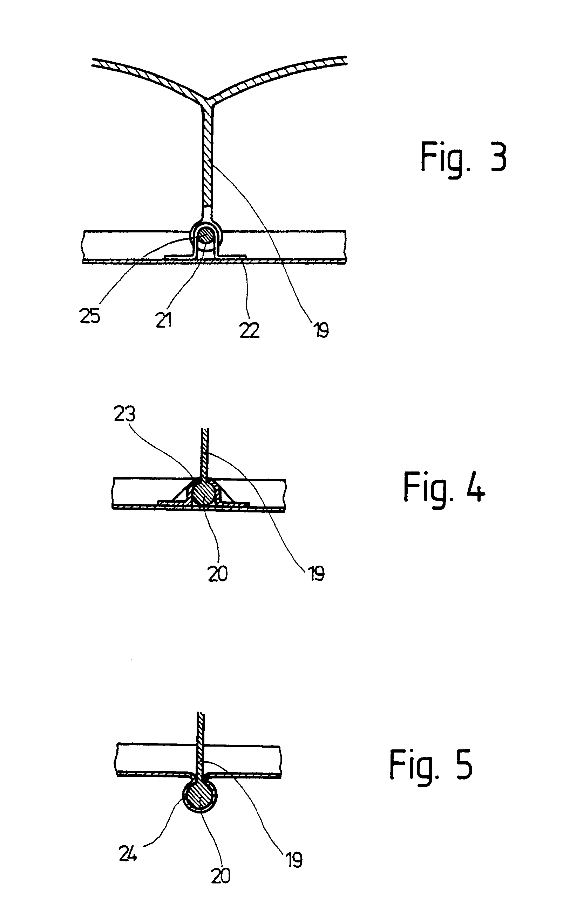

Einzelheiten der Befestigung des Mittelsteges 19 an der Bodenplatte 1 sind aus den Fig. 3 bis 5 ersichtlich. Eine erste Befestigungsmöglichkeit besteht darin, gemäß den Fig. 2 und 4 am unteren Ende des Mittelsteges 19 einen Randwulst 20 vorzusehen, der zwischen beidseitigen Lippen 23 eingeschlossen ist, die mit der Bodenplatte 1 über Punktschweißungen verbunden sein können.

Der Randwulst 20 kann in alternativer Ausführung gem. Fig. 5 auch in eine Sicke 24, die aus dem Bodenblech 1 nach unten hervorsteht, eingepreßt sein.

Bei einer weiteren Befestigungsmöglichkeit gem. Fig. 3 weist der Mittelsteg 19 bodenplattenseitig ein schlaufenartiges Ende 21 auf, das über einen Stift 25 mit Laschen 22 an der Bodenplatte scharnierartig festgelegt ist.

Die Satteldecke 2 weist im vorderen Bereich des Sattels zwischen den pratzenartigen Enden 10 und dem vorderen Ende des Sattels eine größere Stärke als im hinteren Bereich der Sitzfläche auf. Dadurch wird die Stabilität des Sattels, insbesondere dessen Seitenführung bei Kurvenfahrten verbessert.

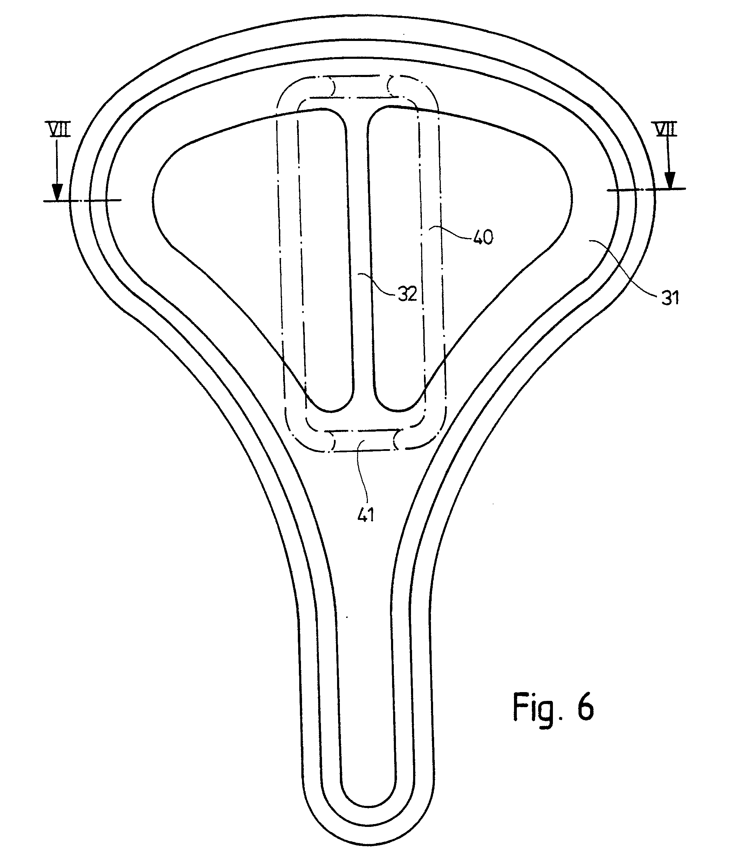

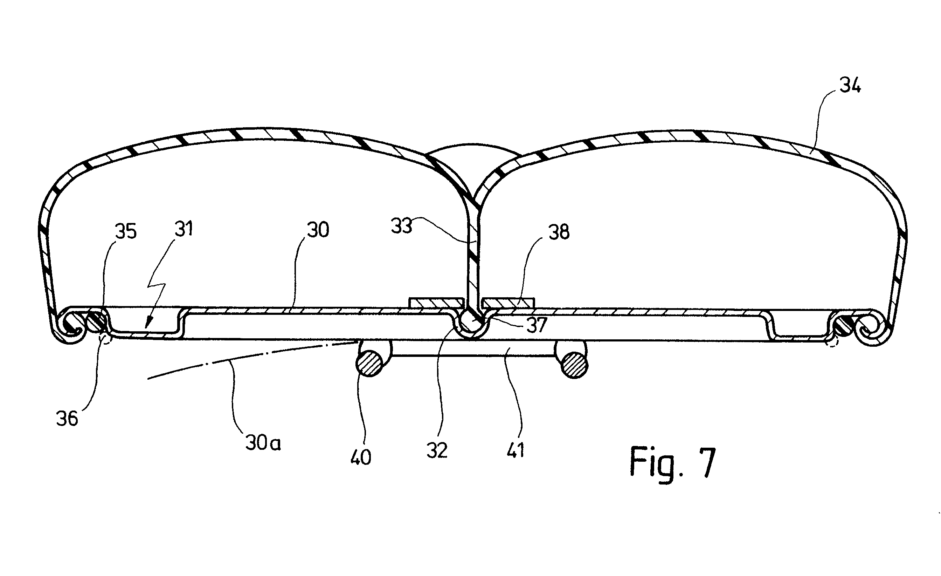

In den Fig. 6 und 7 ist ein weiteres Ausführungsbeispiel eines erfindungsgemäßen Fahrradsattels dargestellt.

Beim Ausführungsbeispiel der Fig. 6 und 7 ist eine Bodenplatte 30 mit einer im Sitzbereich außen umlaufenden Einpressung 31 versehen, die in der axialen Mitte in eine schmale Sicke 32 übergeht. Die Bodenplatte kann auch nicht eben, beispielsweise nach außen abgewölbt ausgebildet sein, wie in Fig. 7 mit 30a angedeutet.

Auch der Fahrradsattel gemäß Fig. 6 und 7 ist mit einem Steg 33 in der Mitte des Sitzbereiches einer Satteldecke 34 versehen.

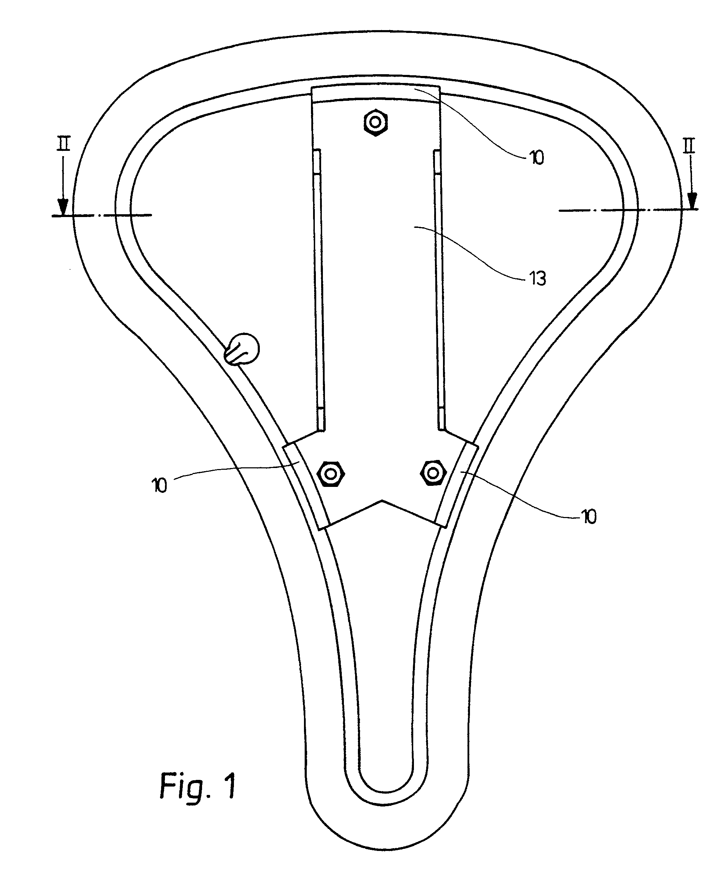

Eine umlaufende Schnur 35 ist an der als Anschlag dienenden Außenkante der Einpressung 31 gehalten. Um die Schnur 35 gegen Herausfallen zu sichern, ist die Einpressung 31 an mehreren Stellen mit einer Nase 36 versehen. Auf diese Weise ist es möglich, den Außenrand der Satteldecke 34 luftdicht zu halten, ohne daß beim Ausführungsbeispiel der Fig. 1 vorgesehene Sattelhalteblech zu benötigen.

Eine Randwulst 37 am unteren Ende des Steges 33 ist in die Sicke 32 eingelegt. Obwohl die Randwulst 37 ähnlich dem Ausführungsbeispiel der Fig. 5 auch in die Sicke 32 eingepreßt sein könnte, ist eine Ausführungsform bevorzugt, bei der Befestigungsbleche 38 beidseits des Steges 33 auf die Bodenplatte 30 aufgepunktet oder sonstwie befestigt sind, um den Randwulst 37 formschlüssig in der Sicke 32 zu halten.

Zur Befestigung des Sattels auf einem Zweirad ist über die Einpressungen in der Bodenplatte 30 ein rechteckiger Stahlformring 7 gelegt, der an gequetschten Enden 41 an der Bodenplatte 30 befestigt, beispielsweise festgepunktet sein kann. Der Fahrradsattel kann dann über ein handelsübliches Klemmelement am Zweirad befestigt werden.

**Patentansprüche**

1.  Luftgefüllter Sattel, insbesondere für Zweiräder, mit einer Satteldecke (2; 34), die randseitig unter Bildung eines luftgefüllten Hohlraums mit einer starren Bodenplatte (1; 30) gasdicht verbunden ist, dadurch gekennzeichnet, daß die Satteldecke (2; 34) zumindest im hinteren Bereich des Sattels über mindestens einen Steg (19; 33) aus flexiblem Material geringer Dehnbarkeit mit der Bodenplatte (1; 30) verbunden ist.

2.  Sattel nach Anspruch 1, dadurch gekennzeichnet, daß die Satteldecke (2; 34) und der Steg bzw. die Stege (19; 33) aus einem elastischen Grundmaterial bestehen, und daß der Steg bzw. die Stege (19; 33) eine Verstärkung aus einem Material geringer Dehnbarkeit aufweisen.

3.  Sattel nach Anspruch 2, dadurch gekennzeichnet, daß das Grundmaterial Gummi oder Kautschuk ist.

4.  Sattel nach Anspruch 2 oder 3, dadurch gekennzeichnet, daß der bzw. die Stege (19; 33) faserverstärkt sind.

5.  Sattel nach Anspruch 4, dadurch gekennzeichnet, daß der Steg bzw. die Stege (19; 33) durch eine Textilauflage verstärkt sind.

6.  Sattel nach einem oder mehreren der vorhergehenden Ansprüche, dadurch gekennzeichnet, daß die Satteldecke (2; 34) im vorderen Bereich des Sattels eine größere Wandstärke aufweist als im hinteren Bereich.

7.  Sattel nach einem oder mehreren der vorhergehenden Ansprüche, dadurch gekennzeichnet, daß innerhalb des luftgefüllten Hohlraums zwischen Bodenplatte (1) und Satteldecke (2) eine Schaumstoffeinlage (28) vorgesehen ist.

8.  Sattel nach einem oder mehreren der Ansprüche 1 bis 6, dadurch gekennzeichnet, daß innerhalb des luftgefüllten Hohlraums zwischen Bodenplatte (1) und Satteldecke (2) eine wabenstrukturartige Einlage (27) vorgesehen ist.

9.  Sattel nach Anspruch 8, dadurch gekennzeichnet, daß die Einlage aus druckbeständigem Gummi oder Kunststoff besteht.

10. Sattel nach einem oder mehreren der vorhergehenden Ansprüche, dadurch gekennzeichnet, daß auf der Satteldecke (2) ein elastischer Textilüberzug vorgesehen ist.

11. Sattel nach einem oder mehreren der vorhergehenden Ansprüche, dadurch gekennzeichnet, daß jeder Steg (19) bodenplattenseitig ein schlaufenartiges Ende (21) aufweist, das über einen Stift (25) mit Laschen (22) an der Bodenplatte scharnierartig festgelegt ist.

12. Sattel nach einem der Ansprüche 1 bis 10, dadurch gekennzeichnet, daß jeder Steg (19; 32) an seinem unteren Ende einen Randwulst (20; 37) aufweist, der mittels eines Befestigungselementes (23; 38) an der Bodenplatte (1; 30) festgelegt ist.

13. Sattel nach einem oder mehreren der Ansprüche 1 bis 10, dadurch gekennzeichnet, daß jeder Steg (19; 32) an seinem unteren Ende einen Randwulst (20; 37) aufweist, der in einer Sicke (24; 32) der Bodenplatte (1; 30) gehalten ist.

Fig. 1

Fig. 2

Fig. 3

Fig. 4

Fig. 5

Fig. 6

Fig. 7

EP 0 455 198 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-2 173 224  (E.BERGWALL)<br>* Seite 1, Spalte 1, Zeilen 35 - 53; Figuren 1-5 *<br>– – – | 1,3 | B 62 J 1/26 |
| D,A | DE-A-3 001 693  (K.TUPPY)<br>* das ganze Dokument *<br>– – – | 1,3 | |
| A | GB-A-2 580 17  (D.SMITH)<br>* das ganze Dokument *<br>– – – | 1 | |
| A | CH-A-1 917 18  (G.LIENHART)<br>* Seite 1, Spalte 2, Zeilen 16 - 22; Figuren 1, 3 *<br>– – – – – | 1,9 | |
| | | | **RECHERCHIERTE SACHGEBIETE (Int. Cl.5)**<br><br>B 62 J |

Der vorliegende Recherchenbericht wurde für alle Patentansprüche erstellt

| Recherchenort | Abschlußdatum der Recherche | Prüfer |
|---|---|---|
| Den Haag | 02 August 91 | CZAJKOWSKI A.R. |